Europäisches Patentamt

European Patent Office

Office européen des brevets

(19)

(11) Veröffentlichungsnummer : **0 110 427
B1**

(12) **EUROPÄISCHE PATENTSCHRIFT**

(45) Veröffentlichungstag der Patentschrift :
28.03.90

(21) Anmeldenummer : 83112239.5

(22) Anmeldetag : 06.12.83

(51) Int. Cl.⁵ : **H 04 B 14/02, H 04 J 1/18,
H 04 J 3/16**

(54) Verfahren für die Übertragung von Nachrichten, bei dem die Codierung der Signale durch die Grösse der Amplituden der Halbwellen oder Perioden eines sinusförmigen Wechselstromes erfolgt.

(30) Priorität : 07.12.82 DE 3245237
04.08.83 DE 3328268
04.08.83 DE 3328249
08.11.83 DE 3340378

(43) Veröffentlichungstag der Anmeldung :
13.06.84 Patentblatt 84/24

(45) Bekanntmachung des Hinweises auf die Patenterteilung : 28.03.90 Patentblatt 90/13

(84) Benannte Vertragsstaaten :
AT CH FR GB IT LI NL SE

(56) Entgegenhaltungen :
DE--A-- 3 029 278
DE--A-- 3 120 084
DE--B-- 1 101 539
FR--A-- 2 282 760
US--A-- 3 344 352

(73) Patentinhaber : Dirr, Josef
Neufahrner Strasse 5
D-8000 München 80 (DE)

(72) Erfinder : Dirr, Josef
Neufahrner Strasse 5
D-8000 München 80 (DE)

## Beschreibung

Die vorliegende Erfindung befasst sich mit einem Verfahren für die Codierung von analogen Probeentnahmen nach dem Prinzip der Pulsamplitudenmodulation (PAM) und Übertragung derselben. Bei den bisher bekannten diesbezüglichen Verfahren entsteht bei der Probeentnahme ein Puls, der die Grösse des analogen Wertes des Nutzsignales während des Abgriffes annimmt. Aufgrund des ungünstigen Störverhältnisses wurde diese Pulsamplitudenmodulation auf Übertragungswegen nicht eingesetzt, sondern nur als Vorstufe für die Pulscodemodulation (PCM). Ein Nachteil der PAM war auch die pulsbedingte Frequenzbanderweiterung. Digitale Übertragungsverfahren, bei denen als Binärcodeelemente die Halbwellen bzw. Perioden eines Wechselstromes vorgesehen werden sind bereits auch bekannt (z.B. Offenlegungsschrift DE-A-30 39 278 A1). Solche Verfahren lassen sich aber nicht immer einsetzen, da hohe Frequenzen erforderlich sind. Ausserdem ist ein erheblicher Aufwand für die Quantisierung und Kompandierung erforderlich.

Aufgabe der vorliegenden Erfindung ist es nun ein Verfahren aufzuzeigen, bei dem die Übertragung der Signale mit kleiner Bandbreite und kleiner Frequenz erfolgen kann, wobei der grosse Aufwand der anderen diesbezüglichen Verfahren vermieden wird. Ausserdem soll es sich bei bekannten Übertragungsverfahren, wie z.B. der Trägerfrequenztechnik, mit denselben Kabeln verwendet werden können. Besonders vorteilhaft kann die Erfindung bei einer zeitmultiplexen Zusammenfassung der Probeentnahmen mehrerer Kanäle eingesetzt werden und zwar über Kabel oder Funk.

Die Aufgabe wird durch die Merkmale des Anspruchs 1 gelöst.

Die Erfindung wird nun nachstehend an Hand der Zeichnungen näher beschrieben. In diesen sind dargestellt :

Fig. 1a 8 Probeentnahmen einer Schwingung

Fig. 1b, 1c Codierungswechselströme mit Periode bezw. Halbwelle als Codierungsmittel.

Fig. 1d, e, f, g 4 Codierwechselströme von je 2 KHz, die gegenneinander um 90 Grad phasenverschoben sind.

Fig. 2a Ein binärcodierter Wechselstrom mit den Perioden als Codeelemente.

Fig. 2b, c, d, e Ein binärcodierter Wechselstrom wird mit 4 um 90 Grad phasenverschobenen Wechselströmen mit je ein Viertel der Frequenz des binärcodierten Wechselstromes pulsamplitudenmoduliert.

Fig. 3a Ein binärcodierter Wechselstrom mit den Halbwellen als Codeelemente und mit Probeentnahmen.

Fig. 3b, c Ein binärcodierter Wechselstrom mit den Halbwellen als Codeelemente wird mit 4 um 90 Grad phasenverschobenen Wechselströmen (davon nur 2 gezeichnet) pulsamplitudenmoduliert.

Fig. 4, 5 Prinzip einer Sprachübertragung gemäss der Erfindung.

Fig. 6 Eine paralle Übertragung von Codierungswechselströmen über eine Leitung.

Fig. 7 Eine trägerfrequente Übertragung von Codierungswechselströmen.

Fig. 8, 9 Eine zeitmultiplexe Übertragung von Codierungswechselströmen.

Fig. 10 Überlagerung zweier um 90 Grad phasenverschobener Wechselströme.

Fig. 11a, 11b Umwandlung eines analogen Eingangssignal in ein amplitudenkontinuierliches Signal.

Fig. 12 Identität von Codierungs — mit dem Sendewechselstrom beim Funk.

Fig. 13, 14, 15 Kompensation von Phasensprängen bei Überlagerung.

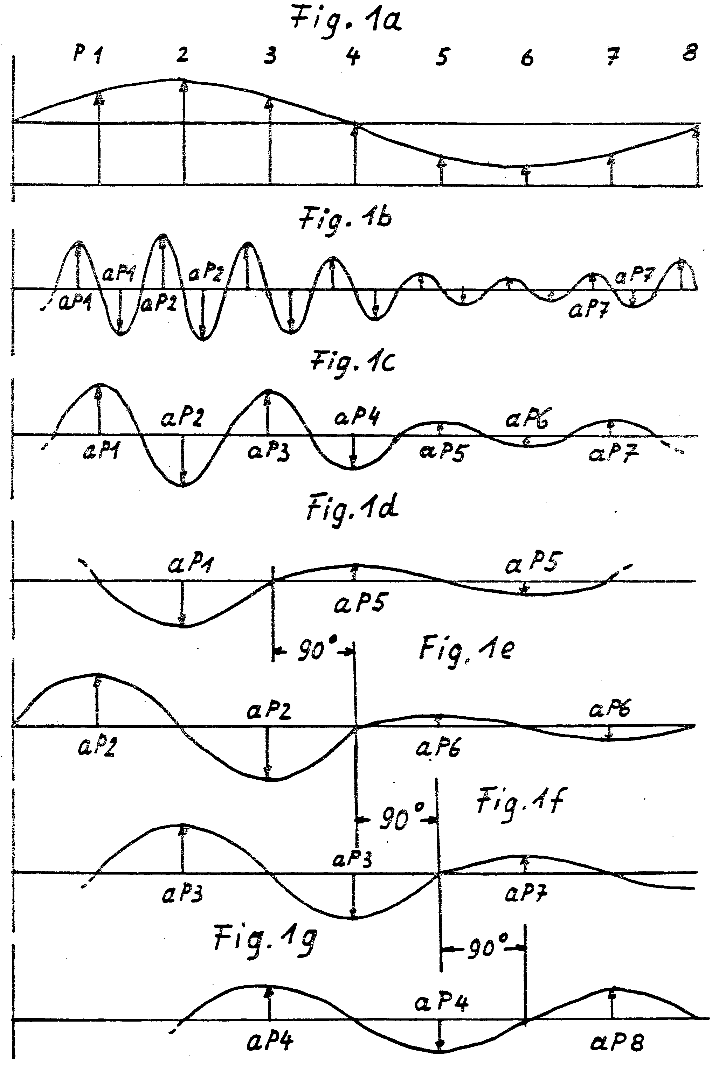

In der Fig. 1a ist eine Schwingung mit 8 Probeentnahmen P1 bis 8 dargestellt. Der Wert jeder Probeentnahme wird durch die Amplitude einer Periode oder Halbwelle eines gleichförmigen, insbesondere sinusförmigen Wechselstromes, des Codierwechselstromes, codiert. In Fig. 1b ist als Codeelement die Periode vorgesehen. Die Probeentnahme P1 der Fig. 1a wird analog auf die positive und negative Halbwelle mit den Amplitudenwerten aP1 und aP1, die Probeentnahme P2 wird auf die beiden Halbwellen aP2/aP2, ... die Probeentnahme P7 wird auf die beiden Halbwellen aP7/aP7 usw. übertragen. Wird als Codeelement die Halbwelle des Codierwechselstromes verwendet, so wird die Probeentnahme P1 der Fig. 1a, wie aus Fig. 1c ersichtlich ist, die Amplitude aP1 der Halbwelle, die Probeentnahme P2 die Amplitude aP2 der Halbwelle, ... die Probeentnahme P7 die Amplitude aP7 der Halbwelle. Die Umwandlung von analogen amplituden und zeitkontinuierlichen Signalen in amplitudenkontinierliche Signale ist bekannt und wird als Vorstufe bei der Pulscode-Modulation vorgesehen (z.B. Zeitschrift Elektronik 1980 Heft 1, S.85) ; es wird daher nicht mehr näher darauf eingegangen. In Fig. 11a und 11b ist im Prinzip eine solche Umwandlung dargestellt. US sind die Signalsspannungen und t ist die Zeitachse. P1,..Px sind die Probeentnahmen. Mit Hilfe einer Abtastschaltung (Sample and Hold) wird das analoge Eingangssignal der Fig. 11a in das amplitudenkontinuierliche Signal der Fig. 11b umgewandelt. In bekannterweise kann man dann unter Ausnutzung der Röhrenkennlinien (Gitterspannung) oder Transistorenkennlinien das amplitudenkontinuierliche Signal in einen Wechselstrom, mit den entsprechenden Amplituden umwandeln.

Laut CCITT ist die Probeentnahmefrequenz 8 KHz. In der Fig. 1b ist dann die Codierfrequenz ebenfalls 8 KHz, in der Fig. 1c genügt eine Frequenz von 4 KHz. Man kann die Codierfrequenz halbieren, wenn man z.B. die Probeentnahmen P1, P3, P5, usw. mit einem Wechselstrom und die Probeentnahmen P2, P4, P6, usw. mit einem anderen Wechselstrom gleicher Frequenz codiert.

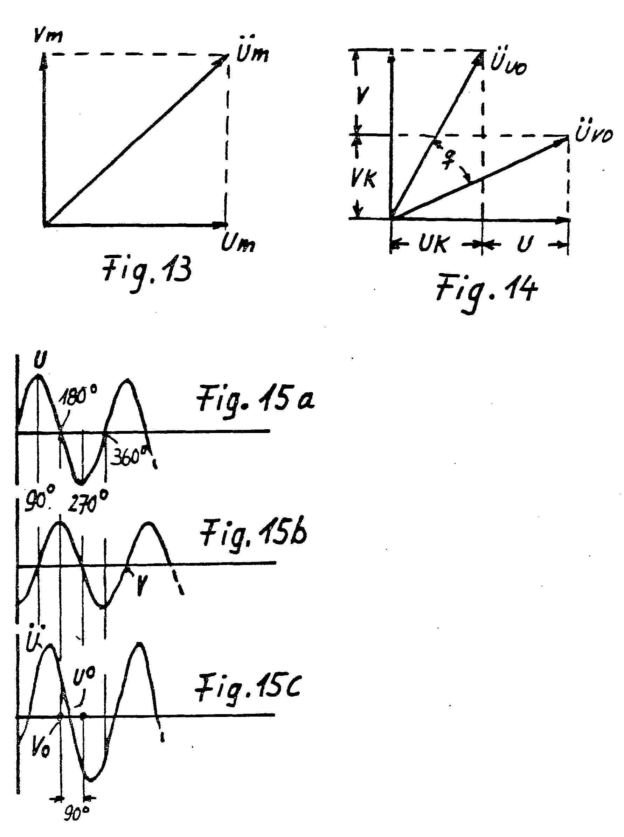

Die beiden Wechselströme müssen dann um 180 Grad gegeneinander phasenverschoben sein. Beide Wechselströme halber Frequenz können dann mit dieser halben Frequenz übertragen werden, wenn zusätzlich eine Phasenverschiebung von 90 Grad vorgenommen wird und beide Wechselströme überlagert werden. Das Prinzip ist hierfür in Fig. 10 dargestellt. CK1 und CK2 sind zwei Wechselströme gleicher Frequenz, die gegeneinander um 90 Grad phasenverschoben sind. CKg ist der Summenwechselstrom, der die gleiche Frequenz aufweist als die Einzelwechselströme. In der Quadraturampitudenmodulation ist dieses Prinzip bekannt und wird daher nicht näher darauf eingegangen. Um in der Empfangsseite wieder die abstandsgetreuen Probeentnahmewerte zu erhalten, muss die Phasenverschiebung von 90 Grad wieder rückgängig gemacht werden.

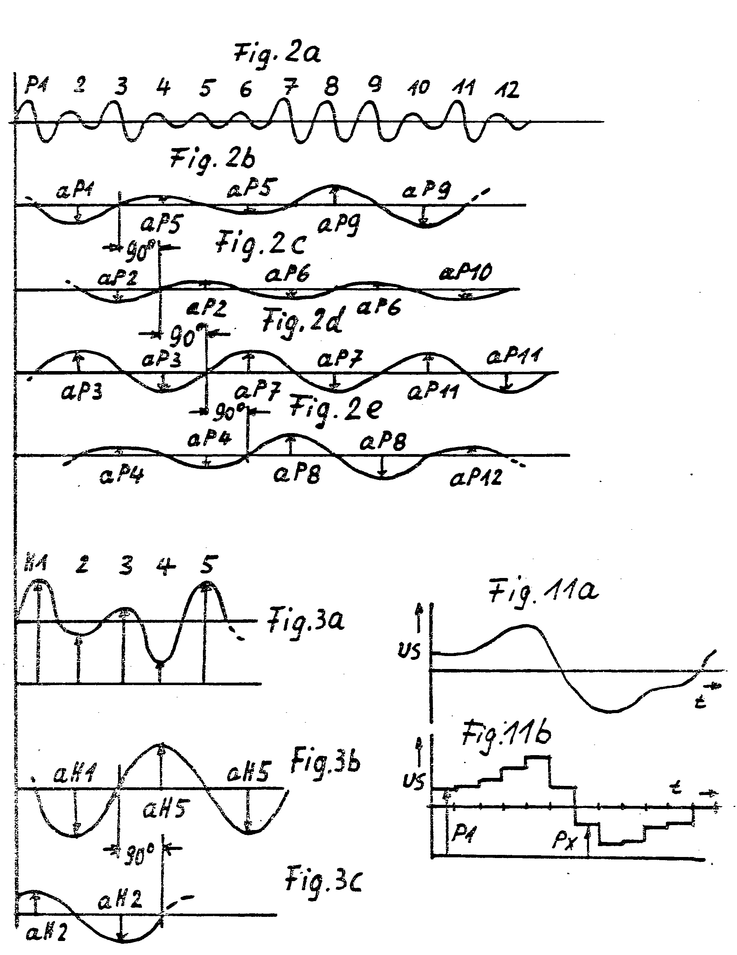

In den Fig. 1d, e, f, g sind für die Codierung der Probeentnahme 4 Wechselströme vorgesehen, die gegeneinander jeweils um 90 Grad phasenverschoben sind, sodass bei Perioden als Codeelement eine Frequenz von 2 KHz je Wechselstrom erforderlich ist. In Fig. 1d werden die Probeentnahmen P1, P5, ... mit den Amplituden aP1, aP5, ..., in der Fig. 1e werden die Probeentnahmen P2, P6, .. mit den Amplituden aP2, aP6, ..., in der Fig. 1f werden die Probeentnahmen P3, P7, ... mit den Amplituden aP3, aP7, ... und in Fig. 1g werden die Probeentnahmen P4, P8, ... mit den Amplituden aP4, aP8, ... codiert. Entsprechend der Fig. 10 kann man nun zwei um 90 Grad phasenverschobene Wechselströme zusammenfassen, überlagern und als einen Wechstrom über die Leitung senden. Bei gleicher Codierfrequenz müssen dann für die zwei Überlagerungswechselströme verschiedene Übertragungswege vorgesehen werden, im Beispiel für den Überlagerungswechselstrom Fig. 1d/1e ein und für den Überlagerungsstrom Fig. 1f/1g ein anderer Übertragungsweg. Man kann auch für jedes Sprachband eine andere Probeentnahmefrequenz wählen, z.B. 8 KHz, 12 KHz, ... Beim letzteren kann man 4 mal 3 KHz als Codierfrequenzen vorsehen, und dann wieder 2 Codierwechselströme überlagern. Überlagerungswechselströme von 2 KHz und 3 KHz können dann über Filter zusammengeführt werden und einem Trägerfrequenzsprachkanal zugeführt werden. Auf der Empfangsseite müssen dann die 2 KHz Godierströme und die 3 KHz Codierwechselströme für Zwecke der Decodierung der Probeentnahmen wieder zusammen ausgewertet werden. Die Filtergüte is von der Bandbreite und der Resonanzfrequenz abhängig, sodass man bei Überlappung der Filter in der Bandbreite eines Sprachkanales eine Vielzahl von Codierwechselströmen bezw. Überlagerungswechselströmen unterbringen kann, z.B. 3,2 KHz, 2,9 KHz, 2,6 KHz, 2,3 KHz, 2 KHz, 1,7 KHz, 1,4 KHz, 1,1 KHz, 0,8 KHz, 0,5 KHz, wobei man natürlich nicht nur PAM-Sprachsignale unterbringen kann. Bei Verwendung von Überlagerungswechselströmen ist auch eine Synchronisierung erforderlich. So genügt es, wenn in vorbestimmten Zeitabständen nur ein Codierwechselstrom an Stelle des Überlagerungswechselstromes übertragen wird. Werden in einem System alle Frequenzen durch Teilung oder Vervielfachung gewonnen, so genügt die Synchronisierung nur eines Überlagerungswechselstromes. Auf diesem Prinzip kann man auch binärcodiert Signale entsprechend den Fig. 2 und 3 übertragen.

In der Fig. 2a ist ein binärcodierter Wechselstrom dargestellt, bei dem als Codeelemente die Perioden und als Kennzustände ein grosser und ein kleiner Amplitudenwert vorgesehen ist. Da die Amplitude der Periode als Codeelement vorgesehen ist, genügtes z.B. die Amplitude der positiven Halbwelle als Probeentnahme zu verwenden. Für die Probentnahmecodierung werden 4 Wechselströme mit je der Viertelfrequenz des binärcodierten Wechselstromes vorgesehen, die gegeneinander um 90 Grad phasenverschoben sind. Die Codeelemente P1, P5, P9, ... wirden in der Fig. 2b durch die Analogwerte der Amplituden aP1, aP5, aP9, ... die Codeelemente P2, P6, P10, ... werden in der Fig. 2c durch die Analogwerte aP2, aP6, aP10, ..., die Codeelements P3, P7, P11, ... werden durch die Analogwerte aP3, aP7, aP11, ..., und die Codeelemente P4, P8, P12, ..., werden durch die Analogwerte aP4, aP8, aP12, ... dargestellt. Wird z.B. ein Sprachkanal mit 64 Kbit digitalisiert, so ist hierfür bei einer Codierung nach Fig. 2a eine Frequenz von 64 KHz notwendig. Durch die Verwendung von 4 Codierwechselströmen entsprechend den Fig. 2b, c, d, e sind dann nur 16 KHz je Codierwechselstrom erforderlich. Durch Überlagerung nach dem Prinzip der Fig. 10 brauchen dann nur zwei Wechselströme mit je 16 KHz übertragen werden.

In der Fig. 3a ist einbinärcodierter Wechselstrom dargestellt, bei dem als Codeelemente die Halbwellen und als Kennzustände ein grosser und ein kleiner Amplitudenwert vorgesehen ist (s. DE-A-30 10 938). Die Probeentnahkemen werden durch 4 Wechselströme der halben Frequenz mit den Perioden als Codelemente codiert. Werden für die Codierung die Halbwellen verwendet ist nur die Viertelfrequenz für die Codierwechselströme erforderlich. Die Probeentnahmen H1, H5, ... werden in Fig. 3b mit den Analogamplituden aH1, aH5, ... die Probeentnahmen H2, ... mit den Analogamplituden aH2, ... usw. codiert. Die zwei anderen Codierwechselströme sind nicht mehr dargestellt, da dieses Prinzip auch in den Fig. 2b bis 2e offenbart ist.

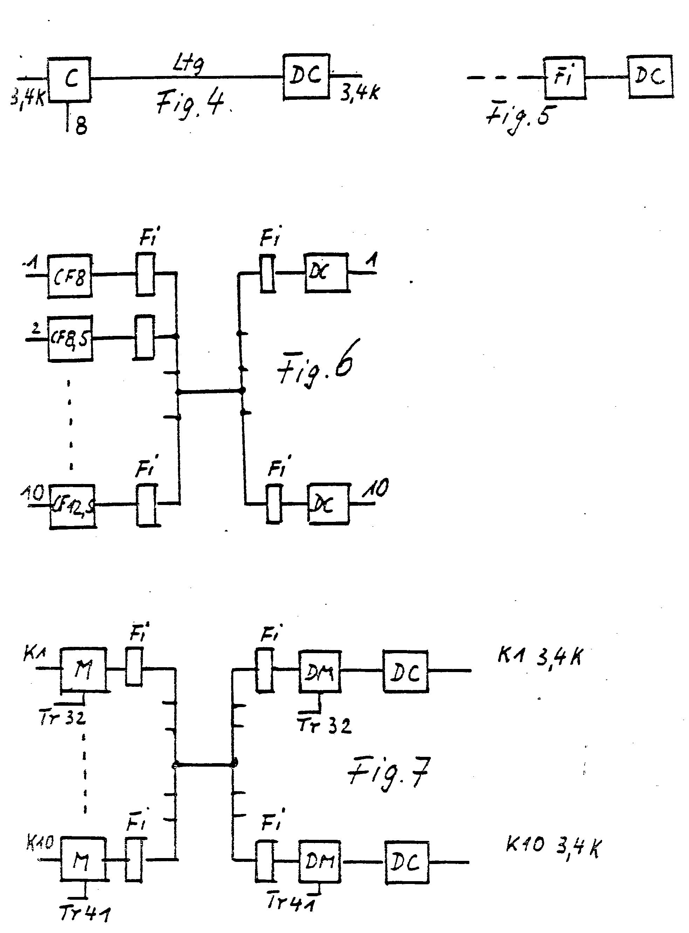

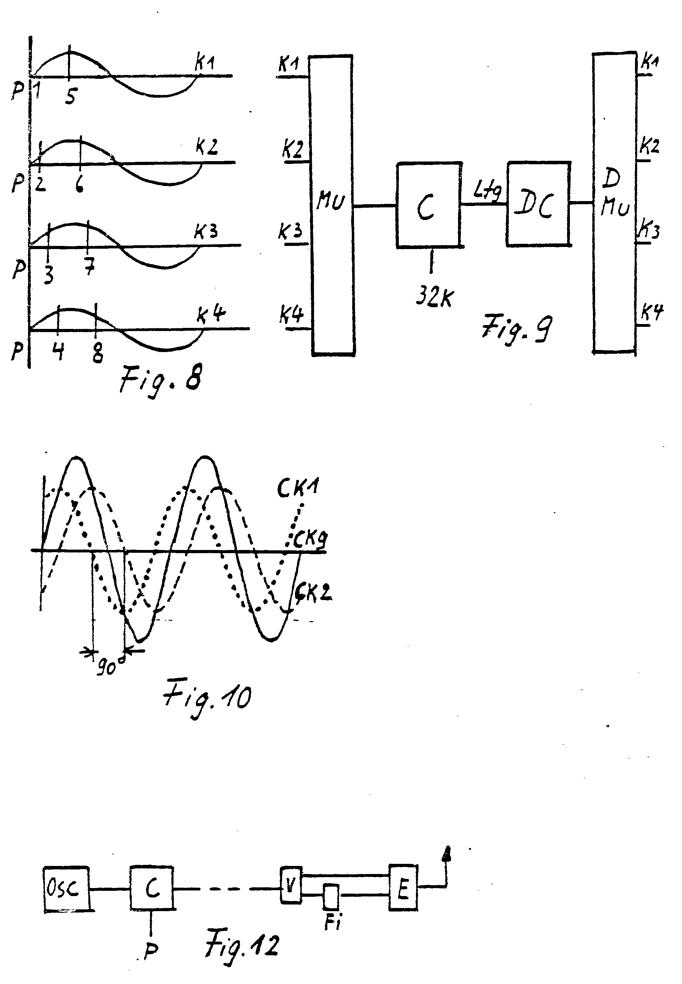

In der Fig. 4 ist das Prinzip einer Sprachübertragung gemäss der Erfindung dargestellt. Der Codierer ist mit C bezeichnet. In diesem werden die Probeentnahmen des Sprachbandes mit einer Bandbreite bis 3,4 KHz in einen 8 KHz Codierwechselstrom umgesetzt. Die Probeentnahmecodierung erfolgt mit der Periode, wie in der Fig. 1b dargestellt. Über die Leitung Ltg übertragen, wird der Codierwechselstrom im Decodierer DC wieder in die Probeentnahmen umgewandelt, und aus diesen Werten wird dann in bekannterweise der Sprachwechselstrom wieder gewonnen. Nach dem Codierer bezw. vor dem Decodierer kann noch ein Filter Fi vorgesehen werden, wie in der Fig. 5 dargestellt, das nur den 8 KHz Codierwechselstrom durchlässt.

In der Fig. 6 ist das Prinzip einer frequenzmultiplexen Übertragung von 10 Sprachkanälen dargestellt. Jedem Kanal ist eine andere Probeentnahmefrequenz zugeordnet, und zwar für den 1. Kanal 8 KHz, für den 2. 8,5 KHz, ... und für den 10. Kanal 12.5 KHz. Der Codierer des Kanales 1 ist mit CF8, des Kanales 2 mit CF8, 5, ... bezeichnet. Über die Filter Fi werden dann alle Kanäle zusammengeschaltet und zur Empfangsstelle gesendet. In dieser werden die verschiedenen Codierfrequenzen durch Filter Fi wieder getrennt und in den Decodierern in die Probeentnahmewerte umgewandelt, aus denen dann der Sprachwechselstrom wieder gewonnen wird.

In der Fig. 7 ist eine trägerfrequente Übertragung von 10 Sprachkanälen mit einem Codierwechselstrom von 8 KHz dargestellt. Die Codierwechselströme von 8 KHz gelangen über die Eingänge K1 bis K10 zu den Modulatoren M, an die die Trägerwechselströme Tr32, ... angeschlossen sind. Der Trägerabstand beträgt 1 KHz. In den nachfolgenden Filtern Fi wird der jeweilige Träger und die obere oder untere Seitenfrequenz ausgesiebt. In der Empfangsstelle werden dann die Seitenfrequenzen durch Filter Fi wieder getrennt, und in den Demodulatoren DM, an die wieder die Träger Tr32, ... angeschlossen sind, wird der Codierwechselstrom von 8 KHz wieder erzeugt. Dieser wird im Decodierer — der Codierer ist in der Sendestelle nicht eingezeichnet — wieder in einen Sprachwechselstrom umgewandelt. (3,4 KHz).

Ein Beispiel einer zeitmultiplexen Anwendung ist in den Fig. 8 und 9 dargestellt. Die Kanäle K1 bis K4 sollen zeitmultiplex übertragen werden. Die Probeentnahmefrequenz sei wieder 8 KHz, die Multiplexfrequenz ist dann 32 KHz. Die Progeentnahmen der 4 Kanäle sind so gestaffelt (P1, 2, 3, 4, 5...), dass die Probeentnahme eines Kanals immer im Abstand von 8 KHz erfolgt. Der Multiplexer Mu der Fig. 9 greift die Proben P1, 2, P3, 4, ... nacheinander ab und überträgt sie auf die Amplituden des 32 KHz Wechselstromes. Als Codiermittel werden dabei die Perioden vorgesehen. Vom Codierer C gelangt der 32 KHz Codierwechselstrom über die Leitung Ltg zum Decodierer DC, in dem aus dem 32 KHz Wechselstrom die Probeentnahmewerte P1, 2, 3, ... wieder erzeugt werden. Im Multiplexer DMu werden die Probeentnahmen wieder den einzelnen Kanälen K1 bis K4 zugeordnet. Eine Synchronisierung ist erforderlich.

Vorteilhaft lässt sich dieses Prinzip einsetzen, wenn niedrige Sendewechselstromfrequenzen über Funk benötigt werden, z.B. für Sprechverbindungen zu Unterseebooten oder zu Höhlen. In der Fig. 12 ist das Prinzipschaltbild eines solchen Senders dargestellt. Im Oszillator Osc wird der Codierwechselstrom, der zugleich Sendewechselstrom ist, erzeugt, und dem Codierer C zugeführt. Die Probeentnahmewerte P werden ebenfalls diesem Codierer zugeschaltet und den Halbwellen bezw. Perioden des Sendewechselstrome aufgedrückt. Die Probeentnahmefrequenz ist dabei mit der Oszillatorfrequenz synchronisiert. Der Sendewechselstrom kann z.B. bis 70 % ausgesteuert werden. Vom Codierer C gelangt der Codierbezw. Sendewechselstrom über nicht eingezeichnete Verstärkerstufen zum Verstärker V. Nach diesem gelangen Nutz- und Nebensignale einmal direkt zur Endstufe E und einmal gelangen nur die Neben- bezw. Geräusch- und Oberwellensignale. Durch das Filter Fi werden die Nutzsignale zur Endstufe E gesperrt. Die Signale über das Filter sind um 180 Grad phasenverschoben, sodass die Geräusch- und Oberwellansignale in der Endstufe kompensiert werden. Diese Kompensierung der Nebensignale kann auch hinter der Endstufe erfolgen. Das Filter wird dann z.B. über einen Diplexer mit dem Sendewechselstrom zusammengeschaltet.

Bei der Überlagerung der Fig. 10 können auch Phasenfehler auftreten wie mit Hilfe der Fig. 13, 14 und 15 erläutert wird. Die Überlagerungswechselströme sind gegeneinander um 90 Grad phasenverschoben. Sind gleiche Vektoren in Fig. 13 mit Um und Vm bezeichnet, so ist der Überlagerungswechselstrom Üm. wechseln nun die Vektoren abwechselnd auf die Grösse O, so erfolgt ein Phasensprung von 90 Grad, sind die Amplitudenänderungen der beiden Überlagerungswechselströme kleiner sind auch die Phasensprünge kleiner. Eine Teilkompensierung ist in Fig. 14 dargestellt. Wird jedem Wechselstrom ein konstanter Wert Uk und Vk zugeordnet, kann eine Amplitudenänderung eines Wechselstromes auf O nie zustandekommen, er hat immer eine Amplitude von Uk bezw. Vk. Die beiden möglichen Werte der Vektoren bei $U = O$ und $V = O$ sind Üuo und Üvo, der Phasensprung kann höchstens den Wert q annehmen. In der Übersicht der Fig. 15 ist nochmals der Phasensprung erläutert. In Fig. 15a ist der Codierwechselstrom U und in der Fig. 15b ist der um 90 Grad phasenverschobene Codierwechselstrom V dargestellt. Man sieht beim 90 Grad hat der Wechselstrom U ein Maximum, V hat aber den Wert O. Bei 180 Grad hat U den Wert gleich O und V ein Maximum. Wird bei 180 Grad $V = O$, so würde der Überlagerungswechselstrom in Fig. 15c Vo einnehmen. Nimmt bei 270 Grad U den Wert O ein, so nimmt in Fig. 15c der Überlagerungswechselstrom den Wert Uo an. Zwischen Vo und Uo sind 90 Grad.

Mann kann natürlich auch durch Wiederholung derselben Amplituden z.B. 4 order 7 mal der Wechselströme der Fig. 15a, b oder c die Ausgleichsvorgänge auf dem Übertragungsweg kompensieren. Durch Filter kann man am Anfang oder Ende des Übertragungsweges die Bandbreite einengen. Diese Methode ist nur erforderlich, wenn die Codierungswerte exakt übertragen werden sollen oder müssen.

Man kann die Frequenzen der Umcoiderungswechselströme beliebig festlegen, es muss dabei nur darauf geachtet werden, dass z.B. bei der Pulsamplitudenmodulation der grösste zulässige Abstand der Probenentnahmen eingehalten wird. Damit der kleinste Amplitudenwert des Codierwechselstromes nicht in den Geräuschpegel fällt, wird dieser so gewählt, dass er ausserhalb des Geräuschpegels liegt (z.B. Fig. 1a, P6, Fig. 2b, aP5).

Bei Verwendung von Halbwellen für die Codierung ist bei einer Probeentnahmefrequenz von 8 KHz ein Codierwechselstrom von 4 KHz erforderlich. Werden für die Codierung der Probenentnahmen 2 Wechselströme von 2 KHz, die um 180 Grad gegeneinander phasenverschoben sind, vorgesehen, so können die beiden Wechselströme mit einem Wechselstrom der Frequenz 2 KHz übertragen werden, wenn einer der beiden — es können auch die Probeentnahmen — um 90 Grad phasenverschoben wird (entsprechend der Fig. 10), und beide überlagert werden. Werden z.B. die Probeentnahmefrequenzen 8 KHz, 9.6 KHz, 11,2 KHz und 12,8 KHz hergenommen, so kann man über einen Trägerfrequenzkanal die Sprachkanäle mit 2 KHz, 2,4 KHz 2,8 KHz, 3,2 KHz übertragen. Der untere Frequenzbereich kann für die Datenübertragung und Synchronisierung verwendet werden. Die Überlagerungswechselströme werden dabei über Filter zusammengeführt und auf der Empfangsseite getrennt. Bei Anschlussleitungen ergeben sich noch wesentlich mehr Möglichkeiten.

Im Fernverkehr kann man z. B. auch Vergleichshalbwellen bezw. Perioden vorsehen und zwar in der Weise, dass z.B. bei einer Zeitmultiplexübertragung entsprechend der Fig. 8 ein 5. Kanal für diese Zwecke vorgesehen wird. Es ist dann eine Zeitmultiplexfrequenz von 5 × 8 KHz = 40 KHz erforderlich. Diesen 5. Kanal könnte man dann zugleich für die Zeichen- und Synchronsignalübertragung mit verwenden. Vorbestimmte Halbwellen bezw. Perioden mit den kleinsten und grössten zugelassenen Amplituden könnte man zum Vergleich in der Empfangsstelle verwenden und damit die Nutzamplituden der Grösse der in der Sendestelle gegebenen Amplituden anpassen, z.B. mit Hilfe von Rück- oder Gegenkopplungen. Falls erforderlich, könnte man auf diese Weise Nutzsignalerneuerer auf dem Übertragungswege wie bei der Pulscodemodulation (PCM) vorsehen.

## Patentansprüche

1. Verfahren für die Codierung von analogen, unipolar oder bipolar abgegriffenen Probeentnahmen nach dem Prinzip der Pulsamplitudenmodulation und Übertragung der selben, dadurch gekennzeichnet, dass die unipolar oder bipolar abgegriffenen Probeentnahmen analog auf die Grösse der Amplituden der Halbwellen oder der beiden Halbwellen der Perioden eines sinusförmigen Wechselstromes, der in einer ununterbrochenen Folge von positiven und negativen Halbwellen gesendet wird, übertragen werden, wobei dem Codierwechselstrom bei Halbwellencodierung die halbe und bei Periodencodierung die Frequenz der Probeentnahme zugeordnet wird, wobei allen Probeentnahmen eine Gleichspannungsvorgabe der Grössederart zugeordnet wird, dass durch die kleinste mögliche Pulsamplitudenprobe (Fig. 1a, P6) eine Halbwellenamplitude entsteht, die über dem Geräuschpegel liegt.

2. Verfahren nach Anspruch 1, dadurch gekennzeichnet, dass der Codierwechselstrom bezw. Die Probeentnahmewerte (Fig. 1a, P1, 2, 3, ...) in der Weise in 2 oder mehrere Wechselströme kleinerer Frequenz umcodiert werden, indem bei Verwendung von 2 Umcodierungswechselströmem die halbe Frequenz für jeden und eine gegenseitige Phasenverschiebung von 180 Grad und bei mehreren Umcodierungswechselströmen die Frequenz und die Phasenverschiebung vorgesehen wird, die sich durch Division der Frequenz des Codierwechselstromes bezw. der Probeentnahme durch die Zahl der Umcodierungswechselströme (z. B. ein Viertel der Frequenz der Probeentnahmefrequenz) bezw. durch Division von 360 Grad durch die Zahl der Umcodierungswechselströme ergibt (360 Grad : 4 = 90 Grad) oder dass die Frequenzen als auch der Phaseneinsatz der vorgesehenen Umcodierungswechselströme so festgelegt werden, dass der zulässige kleinste Abstand zwischen den Amplituden der Codierhalbwellen bezw. Perioden der Umcodierungswechselströme eine vorbestimmte Norm, insbesondere die internationale CCITT-Norm einhält.

3. Verfahren nach den Ansprüchen 1 und 2, dadurch gekennzeichnet, dass Codierwechselströme gleicher Frequenz (Codier- und Umcodierwechselströme), die gegeneinander um 90 Grad phasenverschoben sind bezw. werden, wobei die Amplituden bedarfsweise unipolar/binär bis kontinuierlich codiert sein können, überlagert werden und als ein Wechselstrom übertragen wird, wobei für die Trennung der beiden Wechselströme auf der Empfangsseite eine Synchronisierung von der Sendeseite erfolgt, insbesondere durch eine kurze Übertragung nur eines der beiden Wechselströme in vorbestimmten Zeitabständen.

4. Verfahren nach den Ansprüchen 1 bis 3, dadurch gekennzeichnet, dass eine frequenzmultiplexe Übertragung auf der Basis der Wechselstromtelegrafie oder der Trägerfrequenztechnik vorgesehen ist.

5. Verfahren nach den Ansprüchen 1 bis 3, dadurch gekennzeichnet, dass eine zeitmultiplexe Übertragung mehrerer Kanäle (Fig. 8, K1, 2, 3, 4) in der Weise erfolgt, daß die zeitgestaffelten Probeentnahmen aller Kanäle nur einem Codierwechselstrom mit der der Kanalzahl vielfachen Frequenz einer Probeentnahme und zwar den Amplituden der Halbwellen bezw. Perioden dieses Codierwechselstromes aufmoduliert werden und dass auf der Empfangsseite nach der Decodierung der Amplituden die wiedergewonenen Probeentnahmen synchron den Kanälen wieder zugeordnet werden (Fig. 9, DMu, K1, K2, K3, K4).

6. Verfahren nach den Ansprüchen 1 bis 3, dadurch gekennzeichnet, dass bei einer Übertragung über Funk der Sendewechselstrom zugleich als Codierwechselstrom vorgesehen wird, wobei bedarfsweise bei Vorstufenmodulation zur Kompensierung der Oberwellen und Geräuschspannungen nur diese auch der Endstufe über einen 2. Weg 180 Grad phasenverschoben über ein Nutzsignalsperrfilter (Fig. 12, Fi) zugeführt werden oder dass dies nach der Endstufe über einen Diplexer erfolgt.

7. Verfahren nach den Ansprüchen 1 bis 3, dadurch gekennzeichnet, dass die Umcodierwechselströme für Sprachkanäle frequenzmässig so gelegt werden, dass durch eine Zusammenfassung von Umcodierungs- und/oder Überlagerungswechselströmen vorhandene Trägerfrequenzkanäle verwendet werden können (z.B. 2 KHz der eine Sprachkanal, 3 KHz der andere, Überlagerungswechselströme von 2 KHz und 3 KHz werden zusammengefasst).

8. Verfahren nach Anspruch 3, dadurch gekennzeichnet, dass für die Überlagerung den Codierwechselströmen konstante Werte zugeordnet werden (Fig. 14, Uk, Vk).

9. Verfahren nach den Ansprüchen 1 bis 3, dadurch gekennzeichnet, dass die Halbwellen oder Perioden der Codier- und/oder Überlagerungswechselströme derselben Codierung einige male hintereinander gesendet werden, wobei die Anzahl vorbestimmt ist.

10. Verfahren nach den Ansprüchen 1 bis 6, dadurch gekennzeichnet, dass zur Kompensation von Amplitudenschwankungen der Codierhalbwellen bezw. Perioden Vergleichshalbwellen mit nur grösster und/oder kleinster vorgesehener Amplitude verwendet werden, die beispielsweise in einem eigenen Kanal übertragen werden, wobei diese im Fernverkehr für die Nutzsignalerneuerung vorgesehen werden.

## Claims

1. A method whereby analog samples tapped in unipolar or bipolar manner are coded on the principle of pulse amplitude modulation and for the transmission thereof, characterised in that the samples tapped in unipolar or bipolar manner are transmitted in analog manner to the value of the amplitudes of the half-waves or of both half-waves of the periods of a sinusoidal a.c. transmitted in an uninterrupted sequence of positive and negative half-waves, the coding a.c. being associated with half the sampling frequency in the case of half-wave coding and with the full frequency in the case of period coding, all the samples being assigned a preset d.c. of the value such that the smallest possible pulse amplitude sample (Fig. 1a, P6) results in a half-wave amplitude which lies above the noise level.

2. A method according to claim 1, characterised in that the coding a.c. or the sample values (Fig. 1a, P1, 2, 3...) are recoded into two or more a.c.'s of lower frequency in such manner that when two recoding a.c.'s are used half the frequency and a mutual phase shift of 180° is provided for each, and when a number of recoding a.c.'s are used the frequency and phase shift provided are obtained by dividing the frequency of the coding a.c. or of the sample by the number of recoding a.c.'s (e.g. a quarter of the sampling frequency) or by dividing 360 degrees by the number of recoding a.c.'s (360 degrees : 4 = 90 degrees) or the frequencies and the phase of the provided recoding a.c.'s are so fixed that the permissible smallest distance between the amplitudes of the coding half-waves or periods of the recoding a.c.'s conforms to a predetermined standard, more particularly the international CCITT standard.

3. A method according to claims 1 and 2, characterised in that coding a.c.'s of equal frequency (coding and recoding a.c.'s) which are or become phase-shifted by 90° to one another, the amplitudes being codable in unipolar manner or in binary to continuous manner as required, are superposed and transmitted as an a.c., and in order to separate the two a.c.'s on the receiver side, synchronization is brought about from the transmitter side, more particularly by brief transmission of only one of the two a.c.'s at predetermined time intervals.

4. A method according to claims 1 to 3, characterised in that a frequency-multiplex transmission on the basis of a.c. telegraphy or carrier-frequency technology is provided.

5. A method according to claims 1 to 3, characterised in that time-multiplex transmission of a number of channels (Fig. 8, K1, 2, 3, 4) is brought about in such manner that the time-staggered samples of all the channels are modulated upon only one coding a.c. having a sample frequency which is a multiple of the channel number, i.e. upon the amplitudes of the half-waves or periods of this coding a.c. and, on the receiving side, after decoding of the amplitudes the samples recovered synchronously re-assigned to the channels (Fig. 9, DMu, K1, K2, K3, K4).

6. A method according to claims 1 to 3, characterised in that in the case of broadcast transmission, the transmitting a.c. is simultaneously provided as a coding a.c., and if required, in the case of low-level modulation, in order to compensate for the harmonics and noise voltages only the latter are also fed to the end stage via a second route 180° phase-shifted via a useful-signal suppression filter (Fig. 12, Fi) or this is effected after the end stage via a diplexer.

7. A method according to claims 1 to 3, characterised in that the recoding a.c.'s for speech channels are so disposed as regards frequency that carrier-frequency channels obtained by combining recoding and/or superposed a.c.'s can be used (e.g. 2 KHz for one speech channel, 3 KHz for another, superposed a.c.'s of 2 KHz and 3 KHz are combined).

8. A method according to claim 3, characterised in that for the purpose of superposition, constant values are assigned to the coding a.c.'s (Fig. 14, Uk, Vk).

9. A method according to claims 1 to 3, characterised in that the half-waves or periods of the coding and/or superposed a.c.'s having the same coding are transmitted a few times in succession, the number being predetermined.

10. A method according to claims 1 to 6, characterised in that in order to compensate for fluctuations in the amplitude of the coding half-waves or periods, comparison half-waves with only a maximum and/or minimum preset amplitude are used and are transmitted e.g. in a separate channel, the comparison half-waves being provided for renewing the useful signal in long-distance traffic.

## Revendications

1. Procédé de codage d'échantillons analogiques prélevés de façon unipolaire ou bipolaire selon le principe de la modulation d'impulsions en amplitude et de transmission de ceux-ci, caractérisé en ce qu'on transmet les échantillons prélevés de façon unipolaire ou bipolaire de façon analogique sur la valeur des amplitudes des demi-ondes ou des demi-ondes des périodes d'un courant alternatif sinusoïdal qui est émis en un train ininterrompu de demi-ondes positives et négatives, en adjoignant au courant alternatif de codage, dans le cas du codage demi-ondes la moitié et dans le cas du codage de période la fréquence de l'échantillonnage, en rattachant à tous les échantillonnages une prescription de tension continue de valeur telle que l'échantillon de plus petite amplitude d'impulsions possible produise une amplitude de demi-onde dépassant le niveau du bruit.

2. Procédé selon la revendication 1, caractérisé en ce qu'on change le code du courant alternatif de codage ou les valeurs d'échantillonnage (figures 1a, P1, 2, 3, ...) pour obtenir deux ou plus de deux courants alternatifs de fréquence inférieure, dans le cas où l'on utilise 2 courants alternatifs de transcodage en prévoyant la moitié de la fréquence pour chacun et un déphasage opposé de 180 degrés et, dans le cas de plusieurs courants alternatifs de transcodage en prévoyant la fréquence et le déphasage qui résultent de la division de la fréquence du courant alternatif de codage ou de l'échantillonnage par le nombre des courants alternatifs de transcodage (par exemple un quart de la fréquence d'échantillonnage et respectivement de la division de 360 degrés par le nombre de courants alternatifs de transcodage (360 degrés : 4 = 90 degrés), ou en ce qu'on fixe les fréquences, ainsi que la phase des courants alternatifs de transcodage prévus de façon que le plus petit intervalle admissible entre les amplitudes des demi-ondes de codage ou les périodes des courants alternatifs de transcodage contiennent une norme prédéterminée, en particulier la norme international ISO-7-bits.

3. Procédé selon les revendications 1 et 2, caractérisé en ce qu'on superpose des courants alternatifs de codage de même fréquence (courants alternatifs de codage et de transcodage) qui sont déphasés mutuellement de 90 degrés ou auxquels on donne ce déphasage, les amplitudes pouvant en cas de besoin subir un codage de l'unipolaire/binaire ou continu, et l'on effectue une transmission sous forme de courant alternatif, en effectuant pour la séparation des deux courants alternatifs côté récepteur une synchronisation (côté émetteur) en particulier par une courte transmission d'un seul des deux courants alternatifs à des intervalles de temps prédéterminés.

4. Procédé selon les revendications 1 à 3, caractérisé en ce qu'on prévoit une transmission à multiplexage en fréquence sur la base de la télégraphie harmonique à ondes porteuses ou de la technologie des fréquences porteuses.

5. Procédé selon les revendications 1 à 3, caractérisé en ce qu'on effectue une transmission à multiplexage dans le temps sur plusieurs canaux (figure 8, K1, 2, 3, 4) en superposant aux fins de modulation les échantillonnages étagés dans le temps de tous les canaux à un seul courant alternatif de codage à fréquence multiple du nombre de canaux d'un échantillonnage, en fait aux amplitudes des demi-ondes ou périodes de ce courant alternatif de codage, et en rattachant de nouveau du côté de réception après le décodage des amplitudes les échantillonnages récupérés en synchronisme aux canaux (figure 9, DMU, K1, K2, K3, K4).

6. Procédé selon l'une des revendications 1 à 3, caractérisé en ce que, dans le cas d'une transmission par radio, on prévoit le courant alternatif d'émission en même temps comme courant alternatif de codage, en amenant en cas de besoin, dans le cas d'une modulation à bas niveau, pour la compensation des harmoniques et des tensions de bruit, seulement celles-ci également à l'étage final par un second trajet déphasé de 180 degrés par l'intermédiaire d'un filtre d'interception de signaux utiles (figure 12, Fi), ou en ce qu'on fait cela après l'étage final au moyen d'un diplexeur.

7. Procédé selon les revendications 1 à 3, caractérisé en ce qu'on fixe la fréquence des courants alternatifs de décodage pour canaux vocaux de telle façon qu'on peut utiliser des canaux de fréquence porteuse présents grâce à un rassemblement de courants alternatifs de transcodage et/ou de superposition (par exemple, 2 KHz pour l'un des canaux vocaux, 2 KHz pour l'autre, on rassemble des courants alternatifs de superposition de 2 KHz et 3 KHz).

8. Procédé selon la revendication 3, caractérisé en ce que, pour l'hétirodynage, on attribue aux courants alternatifs de codage des valeurs constantes (figure 14, Uk, Vk).

9. Procédé selon les revendications 1 à 3, caractérisé en ce qu'on émet quelques fois successivement les demi-ondes ou périodes des courants alternatifs de codage et/ou d'hétirodynage du même codage, le nombre étant prédéterminé.

10. Procédé selon les revendications 1 à 6, caractérisé en ce que, pour la compensation des variations d'amplitude des demi-ondes de codage ou des périodes, on utilise des demi-ondes de comparaison d'amplitude prévue seulement très grande et/ou très petite, que l'on transmet par exemple sur un canal propre, en les prévoyant, en trafic à grande distance, seulement pour le renouvellement des signaux utiles.

EP 0 110 427 B1

Fig. 1a

Fig. 1b

Fig. 1c

Fig. 1d

Fig. 1e

Fig. 1f

Fig. 1g

EP 0 110 427 B1

Fig. 2a

P1  2  3  4  5  6  7  8  9  10  11  12

Fig. 2b

aP1        aP5        aP9

aP5
90°   Fig. 2c   aP9

aP2        aP6        aP10

aP2
90°   Fig. 2d   aP6

aP3        aP7        aP11

aP3        aP7        aP11

90°   aP7   Fig. 2e

aP4        aP8

aP4        aP8        aP12

H1  2  3  4  5

Fig. 3a

Fig. 11a

US

aH1        aH5        Fig. 3b

aH5

90°

Fig. 11b

US

t

P1        Px

Fig. 3c

aH2        aH2

aH2

2

Fig.4.

Fig.5

Fig.6

Fig.7

Fig. 8

Fig. 9

Fig. 10

Fig. 12

Fig. 13

Fig. 14

Fig. 15 a

Fig. 15 b

Fig. 15 c